# EUROPÄISCHE PATENTSCHRIFT

(11) **EP 0 500 546 B1**
(45) Veröffentlichungstag und Bekanntmachung des Hinweises auf die Patenterteilung: **22.06.1994**
(21) Anmeldenummer: 90913814.1
(22) Anmeldetag: 22.08.1990
(51) Int. Cl.: H02B 11/133

(54) **VERRIEGELUNGSVORRICHTUNG FÜR EINEN EINSCHUB**
INTERLOCK FOR A PLUG-IN UNIT
VERROUILLAGE POUR UN TIROIR ENFICHABLE

(30) Priorität: 25.08.1989 DE 3928101
(43) Veröffentlichungstag der Anmeldung: 02.09.1992
(73) Patentinhaber: Klöckner-Moeller GmbH, 53115 Bonn (DE)
(72) Erfinder: KREFT, Oliver, D-5300 Bonn 1 (DE); WISSEN, Axel, D-5202 Hennef (DE)
(86) Internationale Anmeldenummer: EP9001392
(87) Internationale Veröffentlichungsnummer: WO9103088

(56) Entgegenhaltungen:
- DE-B- 1 029 070
- US-A- 4 020 301
- US-A- 4 489 362

## Beschreibung

Die Erfindung betrifft eine Vorrichtung zu Verriegelung eines Einschubes in dem Einschubfach eines Schaltschrankes gemäß dem Oberbegriff des Anspruchs 1.

Derartige Vorrichtungen dienen dazu, Einschübe die mit Schaltgeräten oder dergleichen bestückt sind, in bestimmten Einschubtiefen zu verriegeln. Insbesondere die Stellungen "Betriebsstellung", Teststellung" und "Trennstellung", die sich auf die elektrische Verbindung der im Einschub angeordneten Schaltgeräte mit den Stromschienen und Hilfsschaltkreisen im Schaltschrank beziehen, werden durch diese Vorrichtungen fixiert.

Sind in den Einschüben Leistungs- oder Lastschalter angeordnet, soll der Einschub nur bei ausgeschaltetem Schalter von einer in die nächste Stellung verschiebbar sein. Daher besteht die Forderung, daß die Verriegelung des Einschubes nur bei ausgeschaltetem Schaltgerät gelöst werden kann. Umgekehrt soll das Schaltgerät auch nicht einschaltbar sein, wenn die Verriegelung gelöst ist (beispielsweise in einer Zwischenstellung).

Aus der EP 109 544 ist eine Verriegelungsvorrichtung zur Verriegelung eines Einschubes bekannt, die mittels eines Stangengetriebes, bei dem zwei Zahnstangen über ein Ritzel angetrieben werden, den Einschub in den vorbestimmten Stellungen blockierte. Eine der Zahnstangen weist Ausnehmungen auf, in die eine mit der Schaltwelle des Schaltgerätes zusammenwirkende Verriegelungsstange greift und die Zahnstange in ihrer Bewegung blockiert, wenn der Schalter eingeschaltet ist. Hierbei ist jedoch die Verbindung zwischen dem Schalter und der Verriegelungsvorrichtung starr und die Einbaustelle des Schalters an die Bewegungsrichtung der Verriegelungsstange gebunden.

Eine flexiblere Lösung ist durch die DE-AS 27 49 003 beschrieben. Hierbei ist die Einrichtung zur Verriegelung des Schalters über einen Bowdenzug mit dem Schalter verbunden. Diese Einrichtung weist gleichzeitig ein Verstellelement zur Betätigung des Einschubs auf, das die unterschiedlichen Raststellungen fixiert.

Der Erfindung liegt die Aufgabe zugrunde eine Vorrichtung zur Verriegelung eines Einschubes derart zu verbessern, daß mit geringem Aufwand eine sichere Handhabung des Einschubs mit Verriegelung in den einzelnen Stellungen und darüberhinaus eine wechselseitige Blockierung eines Schalters und der Verriegelungsvorrichtung erfolgt.

Diese Aufgabe wird erfindungsgemäß dadurch gelöst, daß die Vorrichtung zur Verriegelung eines Einschubes aus einem an dem Einschub befestigten Trägerelement besteht, in dem ein Riegel verschiebbar und unter, der Wirkung einer Feder stehend, gelagert ist. Dabei greift der Riegel mit seinem einen Ende in Rastöffnungen der Einschubführung des Schaltschrankes, während er über einen Zapfen mit einem ebenfalls im Trägerelement gelagerten Schlieber gekoppelt ist, indem der an dem Riegel angeordnete Zapfen in eine schräg zur Bewegungsrichtung angeordnete Aussparung im Schieber ragt.

Vorteilhaft wirkt sich dabei aus, wenn die Aussparung in dem Schieber eine Verklinkungsnase aufweist, die den Zapfen des Riegels in der entrasteten Stellung verklinkt. Diese Verklinkung wird wieder gelöst durch auf der Einschubführung angeordnete Nocken, die den Riegel aus der Verklinkung heben, wobei der Schieber von einer Feder beaufschlagt wird, die im Sinne einer Rückstellung auf diesen wirkt.

Der Schieber wird vorteilhafterweise durch ein am Griff des Einschubes angeordnetes Bedienelement betätigt, wobei dieses eine Lochung aufweist, die mit einer Lochreihe des Griffs derart zusammenwirkt, daß das Bedienelement sowohl in der entrasteten als auch in der verrasteten Stellung mittels z.B. Bügelschlösseren abschließbar ist.

Eine weiter vorteilhafte Angestaltung der Erfindung kann dahingehen, daß über eine Kodierung des Riegels auf unterschiedliche Rastöffnungen die verschiedenen Stellungen mit unterschiedlichen Schalterfunktionen kombinierbar sind, wie z.B. Teststellung.

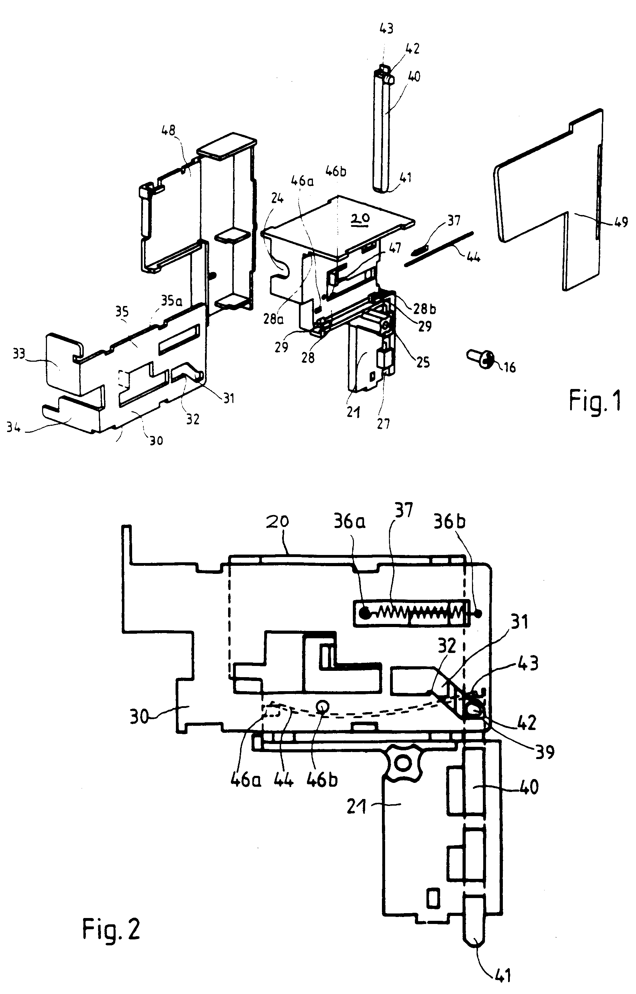

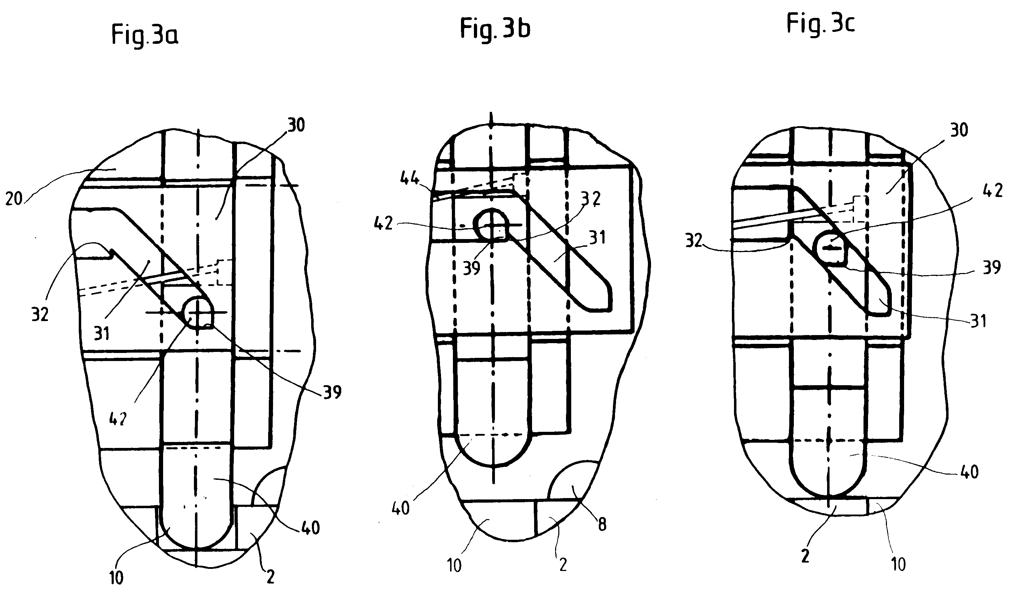

Anhand der Zeichung soll ein Anführungsbeispiel der Erfindung dargestellt und näher erläutert und beschrieben werden. Es zeigen:
- Fig. 1: die Verriegelungsvorrichtung in auseinandergezogener Darstellung;
- Fig. 2: die Verriegelungsvorrichtung als Zusammenstellung
- Fig. 3 a, b, c: die unterschiedlichen Raststellungen der Verriegelungsvorrichtung;
- Fig. 4: eine Verriegelungsvorrichtung in einem Einschub;
- Fig. 5 a und b: das Zusammenwirken eines Schalters mit der Verriegelungsvorrichtung
- Fig. 6 a und b: eine Variante der in Fig. 5 dargestellten Kombination
Die Verriegelungsvorrichtung 20 besteht, wie Fig. 1 zeigt, aus dem Trägerelement 21, das eine Befestigungsbohrung 25 aufweist. Zur Aufnahme eines Schiebers 30 ist eine Führung 28 mit den Führungsflächen 28a und 28b und federnden Haltenasen 29 vorgesehen. Eine rechtwinklig zu der Führung 28 angeordnete weitere senkrechte Führung 27 dient der Aufnahme eines Riegels 40. Im montierten Zustand greift der Zapfen 42 des Riegels 40 in die Aussparung 31 des Schiebers 30, dessen Führungskanten 35a und 35b von den Führungsflächen 28a und 28b der Führung 28 gehalten werden. Federnde Haltenasen 29 umgreifen dabei die Führungskanten 35a und 35b und halten den Schieber in der Führung. Auf den Riegel 40 wirkt ein Federstab 44, der unter Vorspannung eingesetzt den Riegel 40 derart belastet, daß der Zapfen 42 versucht in der Aussparung 31 die untere Position einzunehmen. Dieses Bestreben wird noch unterstützt durch die Zugfeder 37 die zwischen den Schieber 30 und das Trägerelement 21 gespannt wird.
Die Gehäuse 48 und der Deckel 49 lassen sich auf das Trägerelement 21 aufschnappen und dienen als Abdeckung für die beweglichen Teile.
Fig. 2 verdeutlicht die Zuordnung von dem Schieber 30 und dem Riegel 40. Die Kopplung erfolgt über den Zapfen 42 der in die schräge Aussparung 31 des Schiebers 30 greift. Der Federstab 44 stützt sich an den beiden Haltenasen 46a und 46b ab und wirkt über die Auflage 43 auf den Riegel 40. Der Schieber 30 wird durch die Zugfeder 37 beaufschlagt, die sich einerseits an dem Zapfen 36a des Trägerelementes 21 abstützt und andererseits in eine Bohrung 36b im Schieber 30 greift. Wird der Schieber 30 gegen die Federkraft bewegt, läuft der Zapfen 42 in der schrägen Aussparung 31 gegen die Federwirkung des Federstabes 44 hoch und greift schließlich hinter die Verklinkungsnase 32 und verrastet hier. Wird nun der Riegel 40 während des Verschiebens des Einschubes durch Nocken oder dergleichen kurz angehoben, bewegt sich der Zapfen 42 über die Verklinkungsnase 32 und der Riegel 40 kann aufgrund der Federwirkung in der nächsten Aussparung auf dem Verschiebeweg des Einschubes einrasten.
Die einzelnen Stellungen des Riegels 40 und die Relativbewegung des Zapfens 42 in der schrägen Aussparung 31 werden in den Fig. 3a, 3b und 3c deutlich.

Fig. 3a zeigt die tiefste Stellung des Riegels 40. In dieser Position ist der Einschub verriegelt, indem der Riegel 40 in die Rastöffnung 10 der Einschubführung 2 greift. Der Zapfen 42 des Riegels 40 befindet sich an der tiefsten Stelle der Aussparung 31 des Schiebers 30.

In Fig. 3b ist die verrastete Position des Riegels dargestellt. Der Zapfen 42 greift hinter die Verklinkungsnase 32 und verbleibt hier, bis der Riegel 40 durch einen Nocken 8 oder dergleichen angehoben wird. Zur besseren Verrastung ist der Zapfen 42 an der Berührungskante 39 mit der Verklinkungsnase 32 spitzwinklig ausgeführt.

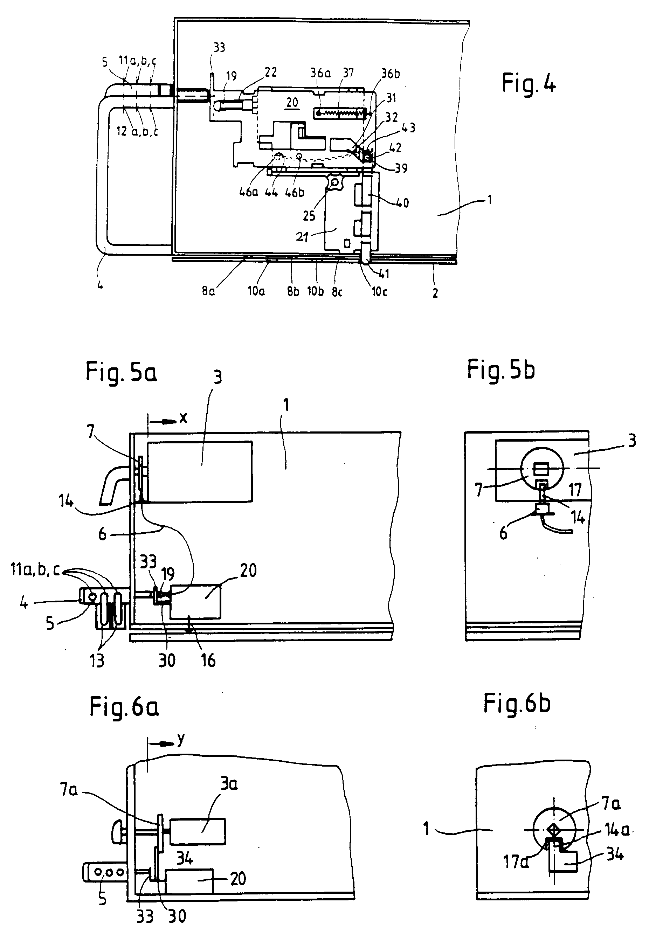

Die Fig.3c zeigt die entrastete Position des Riegels 40. In dieser Stellung gleitet der Riegel 40 auf der Einschubführung 2 wie in Fig. 4 dargestellt, und ist bereit in die nächste Rastöffnung in Verschieberichtung einzutauchen und den Einschub zu verriegeln.

Fig. 4 zeigt die Anordnung der Verriegelungsvorrichtung 20 in einem Einschub 1, der in einer Einschubführung 2 verschiebbar angeordnet ist. Die Verriegelungsvorrichtung 20, ist mittels der Bohrung 25 an der Wand des Einschubes derart befestigt, daß die Schiebelasche 33 des Schiebers 30 mit einem Betätigungselement 5 eines auf der Vorderseite des Einschubs angeordneten Griffes 4 zusammenwirkt. Der Riegel 40 greift mit seinem unteren Ende 41 in eine Rastöffnung 10c in der Einschubführung 2. Die Rastöffnungen 10a, 10b und 10c in der Einschubführung 2 sind dabei den Stellungen des Einschubs "Trennstellung", "Teststellung" und "Betriebsstellung" zugeordnet. Weiter sind auf der Einschubführung Nocken 8a, 8b und 8c angeordnet, die während des Verschiebens des Einschubs 1 mit den unteren Ende 41 des Riegels 40 zusammenwirken.
Mit der Schiebelasche 33 wirkt noch ein Stößel 19, der unter der Wirkung einer Feder 22 steht zusammen. Dieser Stößel 19 betätigt, wie Fig. 5a zeigt, ein Schaltgerät 3, das von der Frontseite des Einschubes 1 zu bedienen ist. In Fig. 5b ist ein Ausschnitt aus Fig. 5a in der Ansichtsrichtung X gezeigt. Das Schaltgerät 3 weist auf der Antriebsachse eine Sperrscheibe 7 auf, in deren Ausschnitt 17 ein Sperrschieber 14 greifen kann. Der Sperrschieber 14 ist mittels eines Bowdenzuges 6 mit der Verriegelungsvorrichtung 20 in der Weise verbunden, daß der Bowdenzug 6 am Trägerelement 21 befestigt ist und der den Bowdenzug betätigende Stößel 19 an der Schiebelasche 33 anliegt. Die Verriegelungsvorrichtung 20 ist mittels der Schraube 16 an der Seitenwand des Einschubes 1 befestigt.
Auf der Frontseite des Einschubes befindet sich der Griff 4, in dem das auf die Schiebelasche 33 wirkende Betätigungselement 5 angeordnet ist. Das Betätigungselement 5 weist Bohrungen 11a, 11b und 11c auf, die mit Bohrungen 12a, 12b und 12c im Griff 4 in der nicht betätigten Stellung fluchten. Damit läßt sich das Betätigungselement 5 mit dem Griff 4 durch bis zu drei Sicherheitsschlösser 13 gegen unbefugte Betätigung sichern.

Die Wirkungsweise ergibt sich nun wie folgt. Wenn das Schaltgerät 3 in die Aus-Stellung gebracht wird, fluchten der Ausschnitt 17 der Sperrscheibe 7 mit dem Sperrschieber 14 des Bowdenzuges. Wird nun das Betätigungselement 5 auf dem Griff 4 verschoben, wirkt dieses auf die Schiebelasche 33. Damit wird der Schieber 30 betätigt, der Riegel 40 über die schräge Aussparung 31 und den Zapfen 42 aus der Rastöffnung 10a gehoben und der Zapfen 42 rastet an der Verklinkungsnase 32 ein. Infolge der Betätigung des Schiebers 30 ist gleichzeitig über den Stößel 19 des Bowdenzuges 6 der Sperrschieber 14 in den Ausschnit 17 der Sperrscheibe 7 bewegt worden. Damit läßt sich das Schaltgerät 3 nicht mehr in die Ein-Stellung schalten. Nach diesem Vorgang ist der Einschub 1 in eine andere Position bewegbar. Dabei wird von dem nächsten passierten Nocken 8 der Riegel 40 kurz angehoben und aus der Verklinkung zwischen dem Zapfen 42 und der Verklinkungsnase 32 gelöst und der Schieber gleitet auf der Einschubführung (Fig.3) Unter der Wirkung des Federstabes 44 rastet der Riegel in die nächstfolgende Rastöffnung 10 ein. Dabei bewegt sich der Schieber 30 wieder in die Ausgangsposition. Der Stößel 19 und der Bowdenzug 6 folgen dieser Bewegung und der Sperrschieber 14 gibt die Sperrscheibe 7 frei. Das Schaltgerät 3 kann wieder geschaltet werden. In der Einschalt-Stellung des Schaltgerätes 3 ist die Bewegung des Sperrschiebers 14 durch die Sperrscheibe 7 blockiert, da die Aussparung 17 und der Sperrschieber 14 nicht mehr fluchten. Der Schieber 30 ist durch den Stößel 19 blockiert. Damit kann der Einschub 1 nicht mehr aus der verrasteten Position bewegt werden, solange das Schaltgerät 3 sich in der Einstellung befindet.

Die Fig. 6a und 6b zeigen eine weiter Möglichkeit ein Schaltgerät 3a mit der Verriegelungsvorrichtung 20 zu koppeln. Das Schaltgerät 3a weist einen derartigen Abstand zu der Verriegelungsvorrichtung 20 auf, daß ein Sperrwinkel 34 mit einer Sperrscheibe 7a zusammenwirkt, wenn der Schieber 30 betätigt wird. Fig. 6b zeigt die Ansicht in Richtung y. Der Sperrwinkel 34 weist eine Nase 14a auf, die in dem Ausschnitt 17a der Sperrscheibe 7a greifen kann. Dies ist wie zu Fig. 5 beschrieben nur in der Aus-Stellung des Schaltgerätes 3a möglich.

## Patentansprüche

1. Verriegelungsvorrichtung (20) für einen Einschub (1), der in dem Einschubfach eines Schaltschrankes oder dergleichen geführt ist und in bestimmten funktionell bedingten Einschubstellungen verrastet, wobei die Verriegelunsvorrichtung (20) von außen lösbar ist, jedoch selbsttätig in dem einzelnen Raststellungen verriegelt, wobei nur in der verriegelten Stellung eine Schaltung eines in dem Einschub (1) installierten Hauptschalters möglich ist, dadurch gekennzeichnet, daß innerhalb eines am Einschub (1) befestigten Trägerrahmens (21) ein Riegel (40) verschiebbar unter der Wirkung einer Feder (44) stehend, gelagert ist und mit seinem einen Ende (41) in den Raststellungen zugeordnete, Rastöffnungen (10a, 10b oder 10c) der Einschubführung (2) greift, wobei der Riegel (40) mit einem Schieber (30), der in einer Schieberführung (28) des Trägerrahmens (21) senkrecht zur Bewegungsrichtung des Riegels (40) beweglich angeordnet ist, gekoppelt ist, indem ein an dem Riegel (40) angeordneter Zapfen (42) in eine schräg zur Bewegungsrichtung angeordnete Aussparung (31) des Schiebers (30) ragt.

2. Verriegelungsvorrichtung nach Anspruch 1 dadurch gekennzeichnet, daß die schräg zur Bewegungsrichtung angeordnete Aussparung (31) in dem Schieber (30) eine Verklinkungsnase (32) aufweist, die den Zapfen (42) des Riegels (40) in der entrasteten Stellung verklinkt, wenn der Schieber (30) im Sinne einer Entrastung betätigt wird.

3. Verriegelungsvorrichtung nach einem der Ansprüche 1 oder 2 dadurch gekennzeichnet, daß auf der Einschubführung (2) den Raststellungen zugeordnete Nocken (8a, 8b, 8c) vorgesehen sind, die bei dem Verschieben des Einschubes (1) den Riegel (40) anheben und aus der Verklinkung lösen, wobei der Schieber (30) von einer Feder (37) beaufschlagt wird, die im Sinne einer Rückstellung auf den Schieber (30) wirkt.

4. Veriegelungsvorrichtung nach einen der Ansprüche 1 bis 3 dadurch gekennzeichnet, daß der Schieber (30) von einem Betätigungselement (5) beaufschlagt wird, das eine Lochreihe (11a, 11b, 11c) aufweist, die mit einer im Griff (4) befindlichen Lochreihe (12a, 12b, 12c) derart zusammen fluchten, daß das Betätigungselement (5) mittels bis zu 3 Bügelschlössern abschließbar ist.

5. Verrieglungsvorrichtung nach einem der Ansprüche 1 bis 3, dadurch gekennzeichnet, daß der Schieber (30) eine abgewinkelte Lasche (33) aufweist, die mit einem an dem Trägerrahmen (21) befestigten Stößel (19) zusammenwirkt, der über einen Bowdenzug (6) einen Sperrschieber (14) in den Ausschnitt (17) einer Sperrscheibe (7) bewegt.

6. Verriegelungsvorrichtung nach einem der Ansprüche 1 bis 4 dadurch gekennzeichnet, daß an dem Schieber (30) ein Sperrwinkel (34) vorgesehen ist, der eine Nase (14a) aufweist, die mit einer Sperrscheibe (7a) eines neben der Verriegelungsvorrichtung (20) angeordneten Schaltgerätes (3a) derart zusammenwirkt, daß die Nase (14a) in der Aus -Stellung des Schaltgerätes (3a) in eine Aussparung (17a) der Sperrscheibe (7a) greift und die Ein-Schaltung des Schaltgerätes verhindert.

## Claims

1. Locking device (20) for a plug-in unit (1), which is inserted into the plug-in compartment of a switching cabinet or of a similar installation, and which locks in certain, functionally defined plug-in positions, while the locking device (20) can be disengaged from outside but locks automatically in the individual lock-in positions, the switching of a main switch installed in the plug-in unit being possible only in the locked position, locking device (20) in which a locking bar (40) is supported in a shiftable way under the action of a spring (44) within a supporting frame (21) mounted on the plug-in unit (1) and engages with its one end (41 ) in lock-in openings (10a, 10b or 10c) assigned to the lock-in positions in the draw-pull (2), the locking-bar (40) being coupled to a slider (30) which is located in a movable way and perpendicularly to the direction of movement of the locking bar (40) in a slide guidance (28) of the supporting frame (21) in such a way that a pin (42) located on the locking bar (40) extends into a recess (31) of the slider (30) arranged obliquely towards the direction of movement.

2. Locking device as claimed in claim 1 wherein the recess (31) arranged obliquely to the direction of movement on the slider (30) comprises a locking catch (32) which latches the pin (42) of the locking bar (40) in the unlocked position, when the slider (30) is operated in the sense of unlocking.

3. Locking device as claimed in one of the claims 1 or 2 wherein lifters (8a, 8b, 8c) assigned to the lock-in positions are provided on the draw-pull (2) and lift the locking bar (40) during the shifting of the plug-in unit (1) and disengage it from the latch, while the slider (30) is under the action of a spring (37) which acts upon the slider (30) in the sense of a reset.

4. Locking device as claimed in one of the claims 1 through 3 wherein the slider (30) is under the action of an operating element (5) which presents a series of holes (11a, 11b, 11c) which are in alignment with a series of holes (12a, 12b, 12c) located in the handle (4) in such a way that the operating element (5) is lockable by means of up to 3 shackle-type locks.

5. Locking device as claimed in one of the claims 1 through 3 wherein the slider (30) presents an offset bracket (33) which cooperates with a tappet (19) that is mounted onto the supporting frame (21) and moves a stopper (14) into the opening (17) of a stopping disc (7) by means of a Bowden pull wire (6).

6. Locking device as claimed in one of the claims 1 through 4 wherein the slider (30) provides a stop angle (34) which has a stopper (14a) which cooperates with a stopping disc (7a) of a switching device (3a) arranged on the side of the locking device (20) in such a way that the stopper (14a) engages into a recess (17a) of the stopping disc (7a) in switch-off position and prevents the switching-on of the switching gear.

## Revendications

1. Dispositif de verrouillage (20) destiné à un ensemble connectable (1), qui est inséré dans le compartiment à tiroir d'une armoire de commande ou d'une installation similaire et qui est encliqueté dans des positions d'insertion précises, dépendants de la fonction, le dispositif de verrouillage (20) pouvant être déverrouillé à partir de l'extérieur, étant cependant encliquetable de façon automatique dans les positions d'encliquetage individuelles, un interrupteur principal installé à l'intérieur de l'ensemble connectable ne pouvant être actionné qu'en position verrouillée, caractérisé en ce qu'un verrou (40) est logé coulissant, et sous l'action d'un ressort (44), à l'intérieur d'un cadre porteur (21) attaché à l'ensemble connectable (1) et entre avec une de ses extrémités (41) dans des ouvertures d'encliquetage (10a, 10b, ou 10c) assignées aux positions d'encliquetage dans la glissière (2) de l'ensemble connectable, le verrou (40) étant couplé à un coulisseau (30), qui est disposé de façon mobile et verticalement par rapport à la direction de mouvement du verrou (40), grâce au fait qu'un pivot (42) aménagé sur le verrou (40) s'étend dans un évidement (31) aménagé dans le coulisseau (30) de façon inclinée par rapport à la direction de mouvement.

2. Dispositif de verrouillage selon la revendication 1, caractérisé en ce que l'évidement (31) aménagé dans le coulisseau (30) de façon inclinée par rapport à la direction de mouvement comporte un ergot d'encliquetage (32) qui assure l'encliquetage du pivot (42) du verrou (40) en position déverrouillée, lorsque le coulisseau (30) est actionné dans le sens d'un déverrouillage.

3. Dispositif de verrouillage selon l'une quelconque des revendications 1 ou 2, caractérisé en ce que des cames (8a, 8b, 8c) assignées aux positions d'encliquetage sont prévues sur la glissière (2) de l'ensemble connectable, cames qui soulèvent le verrou (40) au cours du déplacement de l'ensemble connectable (1) et le dégagent de l'encliquetage, le coulisseau (30) étant sous l'action d'un ressort (37), qui agit sur le coulisseau (30) dans le sens d'un rappel.

4. Dispositif de verrouillage selon l'une quelconque des revendications 1 à 3, caractérisé en ce que le coulisseau (30) se trouve sous l'action d'un élément de commande (5) qui comporte une rangée de perforations (11a, 11b, 11c), qui est alignée sur une rangée de perforations (12a, 12b, 12c) se trouvant dans la manette (4) de telle manière que l'élément de commande (5) soit susceptible d'être fermé au moyen d'un maximum de trois serrures à étrier.

5. Dispositif de verrouillage selon l'une quelconque des revendications 1 à 3, caractérisé en ce que le coulisseau (30) comporte une éclisse de forme angulaire (33) qui coopère avec une tige (19) montée sur le cadre porteur (21), tige qui, par l'intermédiaire d'une transmission par Bowden (6), déplace un coulisseau d'arrêt (14) dans la partie découpée (17) d'un disque d'arrêt (7).

6. Dispositif de verrouillage selon l'une quelconque des revendications 1 à 4, caractérisé en ce qu'un angle d'arrêt (34) est prévu sur le coulisseau (30), angle qui comporte une came (14a) qui coopère avec un disque d'arrêt (7a) d'un appareil de couplage (3a) disposé à côté du dispositif de verrouillage (20) de telle manière que, en position ouverte de l'appareil de couplage (3a), la came (14a) entre dans un évidement (17a) du disque d'arrêt (7a) et empêche la mise en position fermée de l'appareil de couplage.
